(19) Europäisches Patentamt
European Patent Office
Office européen des brevets

(11) EP 4 046 967 A1

(12) EUROPEAN PATENT APPLICATION

(43) Date of publication:
24.08.2022 Bulletin 2022/34

(51) International Patent Classification (IPC):
C01G 53/00 (2006.01)

(21) Application number: 22156712.6

(22) Date of filing: 15.02.2022

(52) Cooperative Patent Classification (CPC):
C01G 53/50; C01P 2004/60; C01P 2004/61;
C01P 2006/12; C01P 2006/40

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.02.2021 KR 20210021229

(71) Applicant: SK On Co., Ltd.
Seoul 03188 (KR)

(72) Inventors:
• DO, Young Hoon
34124 Daejeon (KR)
• LEE, Sang Wook
34124 Daejeon (KR)
• CHO, Yong Hyun
34124 Daejeon (KR)

(74) Representative: Stolmár & Partner
Patentanwälte PartG mbB
Blumenstraße 17
80331 München (DE)

(54) **CATHODE ACTIVE MATERIAL FOR LITHIUM SECONDARY BATTERY AND LITHIUM SECONDARY BATTERY INCLUDING THE SAME**

(57) A cathode active material for a lithium secondary battery according to exemplary embodiments includes a lithium metal oxide containing 80 mol% or more of nickel of all elements except for lithium and oxygen, and has a particle size distribution change rate and a specific surface area change rate value satisfying a predetermined range.

[FIG. 1]

## Description

[BACKGROUND OF THE INVENTION]

1. Field of the Invention

The present invention relates to a cathode active material for a lithium secondary battery and a lithium secondary battery including the same, and more particularly, to a cathode active material including a high nickel-based lithium metal oxide and a lithium secondary battery including the same.

2. Description of the Related Art

A secondary battery is a battery which can be repeatedly charged and discharged, and has been widely applied to portable electronic devices such as a mobile phone, a laptop computer, etc. as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight. In this regard, the lithium secondary battery has been actively developed and applied as a power source.

A cathode of the lithium secondary battery includes a cathode active material capable of reversibly intercalating and deintercalating lithium ions. For example, the cathode active material may include lithium composite oxides.

The lithium composite oxide may include, for example, metal elements such as nickel, cobalt, manganese, aluminum and the like.

As a field, to which the lithium secondary battery is applied, is expanded to large devices such as a hybrid vehicle, etc., research and development for a high nickel-based lithium composite oxide having an increased nickel content to secure a high capacity thereof have been actively conducted.

For example, Korean Patent Registration Publication No. 10-0821523 discloses a method of manufacturing a cathode active material including a high nickel-based lithium composite oxide.

[SUMMARY OF THE INVENTION]

An object of the present invention is to provide a cathode active material for a lithium secondary battery having excellent mechanical stability and chemical stability.

In addition, another object of the present invention is to provide a lithium secondary battery having a high capacity and excellent life-span characteristics.

To achieve the above objects, according to an aspect of the present invention, there is provided a cathode active material for a lithium secondary battery including: a lithium metal oxide containing 80 mol% or more of nickel among all elements except for lithium and oxygen, wherein the cathode active material has a particle size distribution change rate ($\Delta X$) of 60% or less represented by Equation 1 below, and a specific surface area change rate ($\Delta Y$) of 50% or less represented by Equation 2 below:

[Equation 1]

$$\Delta X(\%) = (X_{4.5t} - X)/X \times 100$$

[Equation 2]

$$\Delta Y(\%) = (Y_{4.5t} - Y)/Y \times 100$$

(in Equation 1, X is a $(D_{90}\text{-}D_{10})/D_{50}$ value of the cathode active material measured without pressure-treating the cathode active material, and $X_{4.5t}$ is a $(D_{90}\text{-}D_{10})/D_{50}$ value of the cathode active material measured after pressure-treating the cathode active material at 4.5 t/cm$^2$ for 1 minute, and

in Equation 2, Y is a BET value of the cathode active material measured without pressure-treating the cathode active material, and $Y_{4.5t}$ is a BET value of the cathode active material measured after pressure-treating the cathode active material at 4.5 t/cm$^2$ for 1 minute).

In one embodiment, X may be 1 to 2.

In one embodiment, $X_{4.5t}$ may be greater than 1 and 3 or less.

In one embodiment, the particle size distribution change rate ($\Delta X$) may be 40% or less, and the specific surface area change rate ($\Delta Y$) may be 30% or less:

In one embodiment, the particle size $D_{10}$, $D_{50}$ and $D_{90}$ of the cathode active material measured without the pressure-treating the cathode active material, respectively, 3 to 6 $\mu$m, 8 to 15 $\mu$m and 15 to 22 $\mu$m.

In one embodiment, the particle size $D_{10}$, $D_{50}$ and $D_{90}$ of the cathode active material measured after the pressure-treating the cathode active material at 4.5 t/cm$^2$ for 1 minute, respectively, 2 to 4 $\mu$m, 5 to 14 $\mu$m and 14 to 20 $\mu$m.

In one embodiment, a change rate ($\Delta D_{50}$) of the particle size $D_{50}$ of the cathode active material before and after the pressurization treatment at 4.5 t/cm$^2$ for 1 minute represented by Equation 3 below is 50% or less:

[Equation 3]

$$\Delta\ D_{50}(\%)\ =\ (D_{50}\ \text{measured without the pressuriztion treatment}\ -\ D_{50}\ \text{measured after the pressuriztion treatment})/D_{50}\ \text{measured without the pressuriztion treatment} \times 100.$$

In one embodiment, the lithium metal oxide may be represented by Formula 1 below:

[Formula 1]  $Li_xNi_aCo_bM_cO_y$

(in Formula 1, M is at least one of Al, Zr, Ti, B, Mg, Mn, Ba, Si, Y, W and Sr, and x, y, a, b and c are in a range of $0.9 \leq x \leq 1.2$, $1.9 \leq y \leq 2.1$, $0.8 \leq a \leq 1$, $0 \leq c/(a+b) \leq 0.13$ and $0 \leq c \leq 0.11$, respectively).

According to another aspect of the present invention, there is provided a lithium secondary battery including: a cathode which includes the cathode active material; and an anode disposed to face the cathode.

The cathode active material for a lithium secondary battery according to exemplary embodiments has a high nickel content, such that a lithium secondary battery having a high capacity may be implemented.

The cathode active material for a lithium secondary battery according to exemplary embodiments has a particle size distribution change rate and a specific surface area change rate before and after pressurization satisfying a predetermined range, respectively, such that a lithium secondary battery having improved high temperature life-span characteristics and high temperature storage performance may be implemented.

[BRIEF DESCRIPTION OF THE DRAWINGS]

The above and other objects, features and other advantages of the present invention will be more clearly understood from the following detailed description taken in conjunction with the accompanying drawing, in which:

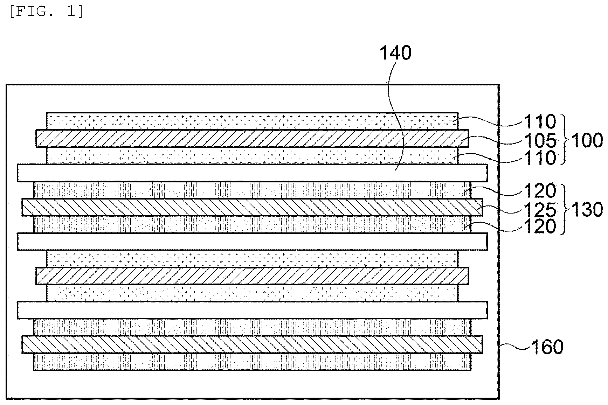

FIG. 1 is a schematic cross-sectional view illustrating a lithium secondary battery according to an embodiment of the present invention.

[DETAILED DESCRIPTION OF THE INVENTION]

As used herein, the term "lithium metal oxide" refers to an oxide capable of intercalating and deintercalating lithium ions, and may include lithium and metal elements.

Hereinafter, the present invention will be described in more detail.

According to the present invention, there is provided a cathode active material for a lithium secondary battery, which includes a lithium metal oxide containing nickel in a predetermined content or more, and has a particle size distribution change rate and a specific surface area change rate satisfying a predetermined range, respectively, which are represented by Equations 1 and 2 to be described below. In addition, there is provided a lithium secondary battery including the cathode active material for a lithium secondary battery.

**Cathode active material for lithium secondary battery**

The cathode active material for a lithium secondary battery according to exemplary embodiments may include a lithium metal oxide containing nickel (Ni) of 80 mol% or more of all elements except for lithium and oxygen.

In some embodiments, the lithium metal oxide may contain 85 mol% or more, 90 mol% or more, or 95 mol% or more of nickel of all elements except for lithium and oxygen. Within the above range, it is possible to implement a lithium secondary battery having an improved capacity.

In one embodiment, the lithium metal oxide may be represented by Formula 1 below.

[Formula 1]     $Li_xNi_aCo_bM_cO_y$

In Formula 1, M may be at least one of Al, Zr, Ti, B, Mg, Mn, Ba, Si, Y, W and Sr, and x, y, a, b and c may be in a range of $0.9 \leq x \leq 1.2$, $1.9 \leq y \leq 2.1$, $0.8 \leq a < 1$, $0 \leq c/(a+b) \leq 0.13$ and $0 \leq c \leq 0.11$, respectively.

In some embodiments, a may be in a range of $0.85 \leq a < 1$, $0.9 \leq a < 1$, or $0.95 \leq a < 1$.

In one embodiment, the lithium metal oxide may include a coating element or a doping element. For example, the coating element or the doping element may include Al, Ti, Ba, Zr, Si, B, Mg, P, Sr, W, La or the like. In this case, it is possible to implement a secondary battery having more improved life-span characteristics.

In one embodiment, the lithium metal oxide may have a form of secondary particles in which primary particles are aggregated. Alternatively, the lithium metal oxide may also have a form of a single particle (monolith). The primary particle and the single particle may refer to a particle which exists alone without forming an aggregate.

The cathode active material for a lithium secondary battery according to exemplary embodiments may have a particle size distribution change rate ($\Delta$ X) of 60% or less represented by Equation 1 below.

In addition, the cathode active material for a lithium secondary battery according to exemplary embodiments may have a specific surface area change rate ($\Delta$ Y) of 50% or less represented by Equation 2 below.

$$[\text{Equation 1}]$$

$$\Delta X(\%) = (X_{4.5t} - X)/X \times 100$$

$$[\text{Equation 2}]$$

$$\Delta Y(\%) = (Y_{4.5t} - Y)/Y \times 100$$

In Equation 1, X is a $(D_{90}-D_{10})/D_{50}$ value of the cathode active material measured without pressure-treating the cathode active material, and $X_{4.5t}$ is a $(D_{90}-D_{10})/D_{50}$ value of the cathode active material measured after pressure-treating the cathode active material at 4.5 t/cm$^2$ for 1 minute.

In Equation 2, Y is a BET value of the cathode active material measured without pressure-treating the cathode active material, and $Y_{4.5t}$ is a BET value of the cathode active material measured after pressure-treating the cathode active material at 4.5 t/cm$^2$ for 1 minute.

For example, when a content of nickel in the lithium metal oxide is high, a secondary battery having a high capacity may be implemented. However, in the case of lithium metal oxide containing nickel in a high content, breakage of the particles is very serious during rolling for manufacturing a cathode. In this case, side reactions between the lithium metal oxide and the electrolyte may be increased. In addition, high temperature life-span characteristics (e.g., high temperature capacity retention rate) and high temperature storage performance (e.g., gas generation during charging and discharging) of the secondary battery may be deteriorated.

However, when the cathode active material has a particle size distribution change rate and a specific surface area change rate satisfying the above-described ranges, a secondary battery having excellent high temperature life-span characteristics and high temperature storage performance may be implemented even if including nickel in a high content.

For example, the particle size distribution change rate and the specific surface area change rate may be calculated by pressure-treating the cathode active material at 4.5 t/cm$^2$ for 1 minute and measuring change rate values before and after the pressurization. The pressure magnitude is similar to the rolling pressure magnitude during manufacturing the cathode, such that the particle size distribution change rate and the specific surface area change rate may be a clearer measure.

When describing Equation 1 above in more detail, the particle size distribution change rate ($\Delta$ X) is calculated by $(X_{4.5t} - X)/X \times 100$, wherein X may mean the $(D_{90}-D_{10})/D_{50}$ value measured without pressure-treating the cathode active material. In addition, $X_{4.5t}$ may mean a $(D_{90}-D_{10})/D_{50}$ value measured after pressure-treating the cathode active material at 4.5 t/cm$^2$ for 1 minute.

For example, the particle size distribution change rate ($\Delta$X) means an absolute value, and may exceed 0.

For example, the particle size of the cathode active material may be measured by a laser diffraction method using a laser diffraction particle size measuring device (e.g., Microtrac, MT 3000).

For example, based on a volume particle size distribution derived by the laser diffraction method, $D_{10}$ may mean a particle size at a point of 10% of the volume particle size distribution. In addition, $D_{50}$ may mean a particle size at a point of 50% of the volume particle size distribution, and $D_{90}$ may mean a particle size at a point of 90% of the volume particle size distribution.

When describing Equation 2 above in more detail, the specific surface area change rate ($\Delta Y$) is calculated by $(Y_{4.5t}-Y)/Y \times 100$, wherein Y may mean the BET value measured without pressure-treating the cathode active material. In addition, $Y_{4.5t}$ may mean a BET value measured after pressure-treating the cathode active material at 4.5 t/cm$^2$ for 1 minute.

For example, the BET value may be calculated according to a gas adsorption/desorption method using a BET measuring instrument (Micrometrics, ASAP2420).

For example, the specific surface area change rate ($\Delta Y$) means an absolute value, and may exceed 0.

In some embodiments, the particle size distribution change rate ($\Delta X$) may be 50% or less, and preferably 40% or less. Within the above range, it is possible to implement a secondary battery having more improved high temperature life-span characteristics and high temperature storage performance.

In some embodiments, the specific surface area change rate $\Delta Y$ may be 40% or less, and preferably 30% or less. Within the above range, it is possible to implement a secondary battery having more improved high temperature life-span characteristics and high temperature storage performance.

In some embodiments, X may be 1 to 2, and preferably 1.1 to 1.4. In addition, the $X_{4.5t}$ may be greater than 1 and 3 or less, and preferably 1.3 to 1.8. For example, $X_{4.5t}$ may be a value greater than X. Within the above range, it is possible to implement a secondary battery having more improved high temperature life-span characteristics and high temperature storage performance.

In one embodiment, the particle size $D_{10}$, $D_{50}$ and $D_{90}$ of the cathode active material measured without the pressure-treating the cathode active material, respectively, 3 to 6 $\mu$m, 8 to 15 $\mu$m and 15 to 22 $\mu$m.

In one embodiment, the particle size $D_{10}$, $D_{50}$ and $D_{90}$ of the cathode active material measured after the pressure-treating the cathode active material at 4.5 t/cm$^2$ for 1 minute, respectively, 2 to 4 $\mu$m, 5 to 14 $\mu$m and 14 to 20 $\mu$m.

In some embodiments, a change rate ($\Delta D_{50}$) of the particle size $D_{50}$ of the cathode active material before and after the pressurization treatment at 4.5 t/cm$^2$ for 1 minute may be 50% or less, and preferably 30% or less. Within the above range, it is possible to implement a secondary battery having better high temperature life-span characteristics and high temperature storage performance. The change rate ($\Delta D_{50}$) may be calculated by Equation 3.

[Equation 3]

$$\Delta \; D_{50}(\%) \; = \; (D_{50} \; \text{measured without the pressuriztion treatment}$$

$$- \; D_{50} \; \text{measured after the pressuriztion treatment})/D_{50} \; \text{measured}$$

$$\text{without the pressuriztion treatment} \times 100.$$

**Lithium secondary battery**

FIG. 1 is a cross-sectional view schematically illustrating a lithium secondary battery according to exemplary embodiments.

Referring to FIG. 1, the lithium secondary battery may include a cathode 100 and an anode 130 disposed to face the cathode 100.

In one embodiment, the lithium secondary battery may include a separation membrane 140 interposed between the cathode 100 and the anode 130.

The cathode 100 may include a cathode current collector 105 and a cathode active material layer 110 on the cathode current collector 105.

The cathode active material layer 110 may include a cathode active material, and if necessary, a cathode binder and a conductive material.

The cathode 100 may be prepared, for example, by mixing and stirring the cathode active material, the cathode binder, and the conductive material, etc. in the dispersion medium to prepare a cathode slurry, and then coating the cathode current collector 105 with the cathode slurry, followed by drying and rolling the same.

The cathode current collector 105 may include, for example, stainless steel, nickel, aluminum, titanium, copper, or an alloy thereof, and preferably, includes aluminum or an aluminum alloy.

The cathode active material may include the above-described cathode active material of the present invention.

The cathode binder may include, for example, an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR). In addition, the cathode binder may be used together with a thickener such as carboxymethyl cellulose (CMC).

The conductive material may include, for example, a carbon-based conductive material such as graphite, carbon black, graphene, or carbon nanotubes and/or a metal-based conductive material such as tin, tin oxide, titanium oxide, or a perovskite material such as $LaSrCoO_3$, and $LaSrMnO_3$.

The anode 130 may include an anode current collector 125 and an anode active material layer 120 on the anode current collector 125.

The anode active material layer 120 may include an anode active material, and if necessary, an anode binder and a conductive material.

The anode 130 may be prepared, for example, by mixing and stirring the anode active material, the anode binder and the conductive material, etc. in a solvent to prepare an anode slurry, and then coating the anode current collector 125 with the anode slurry, followed by drying and rolling the same.

The anode current collector 125 may include, for example, gold, stainless steel, nickel, aluminum, titanium, copper or an alloy thereof, and preferably, includes copper or a copper alloy.

The anode active material may be a material capable of intercalating and deintercalating lithium ions. The anode active material may include, for example, a carbon-based material such as crystalline carbon, amorphous carbon, carbon composite material, or carbon fiber, etc.; a silicone-based material; a lithium alloy and the like.

The amorphous carbon may be, for example, hard carbon, cokes, mesocarbon microbead (MCMB) calcined at 1500°C or lower, mesophase pitch-based carbon fiber (MPCF) or the like. The crystalline carbon may be, for example, natural graphite, artificial graphite, graphite cokes, graphite MCMB, graphite MPCF or the like.

The silicon material may include, for example, Si, $SiO_x$ (0<x<2), Si/C, SiO/C, Si-metal or the like.

The lithium alloy may include, for example, a metal element such as aluminum, zinc, bismuth, cadmium, antimony, silicon, lead, tin, gallium, indium or the like.

The anode binder and the conductive material may be substantially the same as or similar to the above-described cathode binder and the conductive material. The anode binder may be, for example, an aqueous binder such as styrene-butadiene rubber (SBR) for consistency with the carbon-based active material, and may be used together with a thickener such as carboxymethyl cellulose (CMC).

The separation membrane 140 may be interposed between the cathode 100 and the anode 130. In some embodiments, the anode 130 may have an area (e.g., a contact area with the separation membrane 140) larger than that of the cathode 100. Thereby, lithium ions generated from the cathode 100 may smoothly move to the anode 130 without being precipitated in the middle.

The separation membrane 140 may include a porous polymer film made of a polyolefin polymer such as ethylene homopolymer, propylene homopolymer, ethylene/butene copolymer, ethylene/hexene copolymer, ethylene/methacrylate copolymer.

The separation membrane 140 may include a nonwoven fabric made of glass fiber having a high melting point, polyethylene terephthalate fiber or the like.

An electrode cell may be formed by including the cathode 100, the anode 130 and the separation membrane 140. In addition, a plurality of electrode cells may be laminated to form an electrode assembly 150. For example, the electrode assembly 150 may be formed by winding, lamination, z-folding, etc. the separation membrane 140.

The electrode assembly may be housed in a case 160 together with the electrolyte to form a lithium secondary battery.

The electrolyte may include, for example, a lithium salt, and the lithium salt may be housed in the case in a non-aqueous electrolyte state together with an organic solvent.

The lithium salt may be represented by, for example, $Li^+X^-$.

An anion (X-) of the lithium salt may be, for example, any one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. In some embodiments, the lithium salt may include at least one of $LiBF_4$ and $LiPF_6$.

The organic solvent may include, for example, any one or more selected from ethylene carbonate (EC), propylene carbonate (PC), dimethyl carbonate (DMC), diethyl carbonate (DEC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane and the like.

The lithium secondary battery may be manufactured, for example, in a cylindrical shape, a square shape, a pouch shape or a coin shape.

Hereinafter, preferred examples and comparative examples of the present invention will be described. However, the following examples are only preferred examples of the present invention, and the present invention is not limited thereto.

**[Example 1]**

(1) Preparation of lithium metal oxide

To prepare the lithium metal oxide, an aqueous metal precursor solution, in which $NiSO_4$, $CoSO_4$ and $MnSO_4$ were mixed in a molar ratio of 83:11:6, was prepared.

Distilled water was input into a co-precipitation reactor, and internal dissolved oxygen was removed by bubbling with nitrogen gas while maintaining an internal temperature at 63°C.

The aqueous metal precursor solution, an aqueous ammonia solution, and an aqueous NaOH solution as a pH adjuster were input into the co-precipitation reactor, and a co-precipitation reaction was performed while stirring at 500 rpm.

At this time, the aqueous metal precursor solution and the aqueous ammonia solution were input at 0.3 L/h and 0.03 L/h, respectively, thereby controlling so that the aqueous metal precursor solution and the aqueous ammonia solution had a residence time of 5 to 8 hours in the co-precipitation reactor. In addition, the pH of the co-precipitation reactant was maintained at 10.5 to 11.

After the end of the co-precipitation reaction, the precipitate was filtered and dried at 120°C for 12 hours to obtain a metal hydroxide ($Ni_{0.83}Co_{0.12}Mn_{0.05}(OH)_2$).

1 kg of the metal hydroxide and lithium hydroxide ($LiOH.H_2O$) were input into a high-speed mixer in a Li/M molar ratio of 1.03, and then mixed.

The prepared mixture was input into a calcination furnace (Noritake, RHK Simulator), then the mixture was calcined at a temperature of 740 to 760°C (heating rate of 3°C/min) for 16 hours. At this time, oxygen was continuously passed through at a flow rate of 5 L/min.

After the end of the calcination, the calcined product was naturally cooled to room temperature, followed by grinding and classification to obtain lithium metal oxide $LiNi_{0.83}Co_{0.12}Mn_{0.05}O_2$.

(2) Preparation of lithium secondary battery

A cathode slurry was prepared by mixing the lithium metal oxide as a cathode active material, carbon black as a conductive material, and polyvinylidene fluoride (PVDF) as a binder in a weight ratio of 92:5:3.

The cathode slurry was uniformly applied to a region of an aluminum foil (thickness: 15 $\mu$m) having a protrusion part (cathode tab) on one side except for the protrusion part, followed by drying and rolling to prepare a cathode.

An anode slurry was prepared by mixing a mixture of artificial graphite and natural graphite (weight ratio of 7:3) as an anode active material, styrene-butadiene rubber as a binder, and carboxymethyl cellulose as a thickener in a weight ratio of 97:1:2.

The anode slurry was uniformly applied to a region of an aluminum foil (thickness: 15 $\mu$m) having a protrusion part (anode tab) on one side except for the protrusion part, followed by drying and rolling to prepare an anode.

An electrode assembly was formed by interposing a polyethylene separation membrane (thickness: 20 $\mu$m) between the cathode and the anode. Next, a cathode lead and an anode lead were welded and connected to the cathode tab and the anode tab, respectively.

The electrode assembly was housed in a pouch (case) so that some regions of the cathode lead and the anode lead were exposed to an outside of the pouch, followed by sealing three sides of the pouch except for a side of an electrolyte injection part.

After injecting the electrolyte and sealing the side of the electrolyte injection part, a lithium secondary battery was prepared by impregnation for 12 hours.

The electrolyte used herein was prepared by dissolving 1M $LiPF_6$ solution (a mixed solvent of EC/EMC/DEC in a volume ratio of 25:30:45), and adding and mixing 1% by weight ('wt.%') of fluoroethylene carbonate (FEC), 0.3 wt.% of vinylethylene carbonate (VC), 1.0 wt.% of lithium difluorophosphate (LiPO2F2), 0.5 wt.% of 1,3-propane sultone (PS), and 0.5 wt.% of prop-1-ene-1,3-sultone (PRS) based on the total weight of the electrolyte.

**[Example 2]**

A lithium secondary battery was prepared by performing the same procedures as described in Example 1, except that the calcination time was changed to 10 hours when preparing the lithium metal oxide.

**[Example 3]**

A lithium secondary battery was prepared by performing the same procedures as described in Example 1, except that calcination was performed at a temperature of 720°C or higher and less than 740°C when preparing the lithium metal oxide.

**[Example 4]**

A lithium secondary battery was prepared by performing the same procedures as described in Example 1, except that the aqueous metal precursor solution and the aqueous ammonia solution were controlled to have a residence time of 2 to 4 hours in the co-precipitation reactor when preparing the metal hydroxide.

**[Comparative Example 1]**

When preparing the metal hydroxide, the aqueous metal precursor solution and the aqueous ammonia solution were changed to have a residence time of 2 to 4 hours in the co-precipitation reactor. In addition, when preparing the lithium metal oxide, calcination was performed at a temperature of 720°C or higher and less than 740°C for 10 hours.
A lithium secondary battery was prepared by performing the same procedures as described in Example 1, except for the above-described changes.

**[Comparative Example 2]**

A lithium secondary battery was prepared by performing the same procedures as described in Example 1, except that calcination was performed for 10 hours at a temperature of 720°C or higher and less than 740°C when preparing the lithium metal oxide.

**[Comparative Example 3]**

When preparing the metal hydroxide, the aqueous metal precursor solution and the aqueous ammonia solution were changed to have a residence time of 2 to 4 hours in the co-precipitation reactor. In addition, when preparing the lithium metal oxide, calcination was performed in a temperature range of 720°C or higher and less than 740°C.
A lithium secondary battery was prepared by performing the same procedures as described in Example 1, except for the above-described changes.

**[Comparative Example 4]**

When preparing the metal hydroxide, the aqueous metal precursor solution and the aqueous ammonia solution were changed to have a residence time of 2 to 4 hours in the co-precipitation reactor. In addition, when preparing lithium metal oxide, the calcination time was changed to 10 hours.
A lithium secondary battery was prepared by performing the same procedures as described in Example 1, except for the above-described changes.

**Experimental Example 1: Evaluation of particle size distribution change rate and specific surface area change rate**

(1) Measurement of particle sizes ($D_{10}$, $D_{50}$ and $D_{90}$) before and after the pressurization treatment

The particle sizes were measured by a laser diffraction method using a laser diffraction particle size measuring device (Microtrac, MT 3000).
Herein, $D_{10}$ means a particle size at a point of 10% of the volume particle size distribution, $D_{50}$ means a particle size at a point of 50% of the volume particle size distribution, and $D_{90}$ means a particle size at a point of 90% of the volume particle size distribution.
The particle sizes of the lithium metal oxides of the examples and comparative examples were measured without the pressurization treatment.
Next, the lithium metal oxides of the examples and comparative examples were subjected to pressurization treatment at 4.5 t/cm$^2$ for 1 minute, and then the particle sizes were measured.
The pressurization treatment was performed by inputting lithium metal oxides of the examples and comparative examples into a circular holder having a diameter of 13 mm, and pressing the same with a hydraulic press (Carver, No. 4350).
$D_{10}$, $D_{50}$, and $D_{90}$ before and after the pressurization treatment of the lithium metal oxide are shown in Table 1 below.
A $(D_{90}-D_{10})/D_{50}$ value in the case of without pressure-treating was defined as X, and a $(D_{90}-D_{10})/D_{50}$ value in

the case of pressure-treating at 4.5 t/cm$^2$ was defined as $X_{4.5t}$, then values were calculated, and results thereof are described in Table 1 below.

As a separate additional experimental example, the lithium metal oxides of Example 1 and Comparative Example 1 were subjected to pressurization treatment at 1 t/cm$^2$ for 1 minute, and $D_{50}$ was measured, respectively. A change rate of the particle size ($D_{50}$) ('$D_{50}$ change rate') (%) before and after the pressurization treatment was calculated by ($D_{50}$ before the pressurization treatment - $D_{50}$ after the pressurization treatment)/$D_{50}$ before the pressurization treatment $\times$ 100. The $D_{50}$ change rate of the lithium metal oxides of Example 1 was 2.1%, and the $D_{50}$ change rate of the lithium metal oxide of Comparative Example 1 was 7.8%.

(2) Evaluation of particle size distribution change rate ($\Delta$X)

A particle size distribution change rate ($\Delta$ X) value was calculated according to Equation 1 below using the X values and the $X_{4.5t}$ values measured in the above (1), and results thereof are described in Table 2 below.

$$[\text{Equation 1}]$$

$$\triangle X(\%) = (X_{4.5t} - X)/X \times 100$$

(3) Evaluation of specific surface area change rate ($\Delta$Y)

Specific surface areas (BET values) of the lithium metal oxides of the examples and comparative examples were measured using a BET measuring instrument (Micrometrics, ASAP2420).

The BET values were measured without pressure-treating the lithium metal oxides of the examples and comparative examples. Next, the lithium metal oxides of the examples and comparative examples were subjected to pressurization treatment at 4.5 t/cm$^2$ for 1 minute, and then BET values were measured.

A BET value in the case of without pressure-treating was defined as Y, and a BET value in the case of pressure-treating was defined as $Y_{4.5t}$.

Specific surface area change rates ($\Delta$ Y) value were calculated according to Equation 2 below using the measured Y values and $Y_{4.5t}$ values, and results thereof are described in Table 2 below.

$$[\text{Equation 2}]$$

$$\triangle Y(\%) = (Y_{4.5t} - Y)/Y \times 100$$

**Experimental Example 2: Evaluation of high temperature life-span characteristics and storage performance**

(1) Measurement of initial charge capacity and initial discharge capacity

The lithium secondary batteries of the examples and comparative examples were CC/CV charged (1C 4.25 V 0.1C CUT-OFF) at room temperature, and CC-discharged (1C 3.0 V CUT-OFF) to measure initial charge capacity and initial discharge capacity.

(2) Evaluation of high temperature life-span characteristics (capacity retention rate at 45°C)

The lithium secondary batteries of the examples and comparative examples were CC/CV charged (1C 4.25 V 0.1C CUT-OFF), and CC-discharged (1C 3.0 V CUT-OFF) at 45°C.

The charge and discharge were repeatedly performed 200 times.

The high temperature capacity retention rate was calculated by a percentage of value obtained by dividing the discharge capacity measured at the 200th time by the initial discharge capacity measured in the above (1).

High temperature capacity retention rate (%) = (200th discharge capacity/Initial discharge capacity) $\times$ 100

The calculated high temperature capacity retention rates are described in Table 2 below.

(3) Evaluation of high temperature storage performance (gas generation amount at 60°C)

The lithium secondary batteries of the examples and comparative examples were charged to 100% state-of-charge (SOC) (4.25 V 0.05C CUT-OFF), and stored in a chamber at 60°C.

After 4 weeks, amounts of gas generated inside the lithium secondary batteries were analyzed using gas chromatography, and the analyzed values are described in Table 2 below.

[TABLE 1]

|  | Before pressurization treatment | | | | After pressurization treatment (4.5 t/cm$^2$) | | | |
|---|---|---|---|---|---|---|---|---|
|  | $D_{10}$ | $D_{50}$ | $D_{90}$ | X | $D_{10}$ | $D_{50}$ | $D_{90}$ | $X_{4.5t}$ |
| Example 1 | 5.92 | 13.10 | 21.19 | 1.166 | 3.13 | 11.39 | 19.10 | 1.402 |
| Example 2 | 3.54 | 9.48 | 16.29 | 1.345 | 2.29 | 7.42 | 15.61 | 1.795 |
| Example 3 | 3.17 | 9.27 | 21.63 | 1.991 | 2.61 | 5.30 | 18.24 | 2.949 |
| Example 4 | 5.91 | 12.72 | 19.92 | 1.101 | 2.12 | 9.21 | 17.99 | 1.723 |
| Comparative Example 1 | 5.58 | 10.96 | 18.53 | 1.182 | 0.65 | 7.35 | 16.20 | 2.116 |
| Comparative Example 2 | 4.43 | 10.99 | 22.30 | 1.626 | 1.85 | 7.13 | 18.71 | 2.365 |
| Comparative Example 3 | 4.80 | 11.28 | 20.96 | 1.433 | 1.33 | 8.12 | 19.91 | 2.288 |
| Comparative Example 4 | 6.40 | 12.48 | 20.41 | 1.123 | 2.45 | 8.73 | 19.01 | 1.897 |

[TABLE 2]

|  | $\Delta X(\%)$ | $\Delta Y(\%)$ | Capacity retention rate at 45°C (%) | Gas generation amount at 60°C (ml) |
|---|---|---|---|---|
| Example 1 | 20.3 | 12.1 | 95 | 5.7 |
| Example 2 | 33.5 | 29.7 | 95 | 5.3 |
| Example 3 | 48.1 | 43.0 | 94 | 8.3 |
| Example 4 | 56.4 | 34.7 | 93 | 9.4 |
| Comparative Example 1 | 79.1 | 82.4 | 76 | 34.2 |
| Comparative Example 2 | 45.4 | 69.2 | 77 | 32.9 |
| Comparative Example 3 | 59.7 | 55.2 | 84 | 24.5 |
| Comparative Example 4 | 69.0 | 38.9 | 80 | 26.6 |

Referring to Table 2 above, the lithium secondary batteries of the examples, in which the particle size distribution change rate ($\Delta X$) value was 60% or less and the specific surface area change rate ($\Delta Y$) value was 50% or less, exhibited the improved high temperature life-span characteristics and high temperature storage performance.

For example, the lithium secondary batteries of the examples exhibited about 20% improvement in the capacity retention rate at 45°C compared to the lithium secondary batteries of the comparative examples.

In addition, the lithium secondary batteries of the examples exhibited gas generation amount values reduced by at most about 1/6 compared to the lithium secondary batteries of the comparative examples.

The lithium secondary battery of Comparative Example 1, in which the particle size distribution change rate ($\Delta X$) value exceeded 60% and the specific surface area change rate ($\Delta Y$) value exceeded 50%, the high temperature life-span characteristics and high temperature storage performance were inferior compared to the lithium secondary batteries of the examples.

The lithium secondary batteries of Comparative Examples 2 to 4, in which the particle size distribution change rate ($\Delta X$) value exceeded 60% or the specific surface area change rate ($\Delta Y$) value exceeded 50%, the high temperature life-span characteristics and high temperature storage performance were inferior compared to the lithium secondary batteries of the examples.

The secondary batteries of Examples 1 and 2, in which the particle size distribution change rate ($\Delta X$) value was 40% or less and the specific surface area change rate ($\Delta Y$) value was 30% or less, exhibited more improved high temperature life-span characteristics and high temperature storage performance.

[Description of Reference Numerals]

| 100: | Cathode |
|---|---|
| 105: | Cathode current collector |
| 110: | Cathode active material layer |
| 120: | Anode active material layer |
| 125: | Anode current collector |
| 130: | Anode |
| 140: | Separation membrane |
| 160: | Case |

**Claims**

1. A cathode active material for a lithium secondary battery comprising:

   a lithium metal oxide containing 80 mol% or more of nickel among all elements except for lithium and oxygen, wherein the cathode active material has a particle size distribution change rate ($\Delta$ X) of 60% or less represented by Equation 1 below, and
   a specific surface area change rate ($\Delta$ Y) of 50% or less represented by Equation 2 below:

$$[\text{Equation 1}]$$

$$\triangle \text{X(\%)} = (\text{X}_{4.5t} - \text{X})/\text{X} \times 100$$

$$[\text{Equation 2}]$$

$$\triangle \text{Y(\%)} = (\text{Y}_{4.5t} - \text{Y})/\text{Y} \times 100$$

   (in Equation 1, X is a $(D_{90}-D_{10})/D_{50}$ value of the cathode active material measured without pressure-treating the cathode active material, and $X_{4.5t}$ is a $(D_{90}-D_{10})/D_{50}$ value of the cathode active material measured after pressure-treating the cathode active material at 4.5 t/cm$^2$ for 1 minute, and
   in Equation 2, Y is a BET value of the cathode active material measured without pressure-treating the cathode active material, and $Y_{4.5t}$ is a BET value of the cathode active material measured after pressure-treating the cathode active material at 4.5 t/cm$^2$ for 1 minute).

2. The cathode active material for a lithium secondary battery according to claim 1, wherein X is 1 to 2.

3. The cathode active material for a lithium secondary battery according to claim 1, wherein $X_{4.5t}$ is greater than 1 and 3 or less.

4. The cathode active material for a lithium secondary battery according to claim 1, wherein the particle size distribution change rate ($\Delta$ X) is 40% or less, and the specific surface area change rate ($\Delta$Y) is 30% or less.

5. The cathode active material for a lithium secondary battery according to claim 1, wherein the particle size $D_{10}$, $D_{50}$ and $D_{90}$ of the cathode active material measured without the pressure-treating the cathode active material, respectively, 3 to 6 $\mu$m, 8 to 15 $\mu$m and 15 to 22 $\mu$m.

6. The cathode active material for a lithium secondary battery according to claim 1, wherein the particle size $D_{10}$, $D_{50}$ and $D_{90}$ of the cathode active material measured after the pressure-treating the cathode active material at 4.5 t/cm$^2$ for 1 minute, respectively, 2 to 4 $\mu$m, 5 to 14 $\mu$m and 14 to 20 $\mu$m.

7. The cathode active material for a lithium secondary battery according to claim 1, wherein a change rate ($\Delta D_{50}$) of the particle size $D_{50}$ of the cathode active material before and after the pressurization treatment at 4.5 t/cm$^2$ for 1

minute represented by Equation 3 below is 50% or less:

$$[\text{Equation 3}]$$

$$\triangle\ D_{50}(\%)\ =\ (D_{50}\ \text{measured without the pressuriztion treatment} - D_{50}\ \text{measured after the pressuriztion treatment})/D_{50}\ \text{measured without the pressuriztion treatment} \times 100.$$

8. The cathode active material for a lithium secondary battery according to claim 1, wherein the lithium metal oxide is represented by Formula 1 below:

$$[\text{Formula 1}] \qquad Li_xNi_aCo_bM_cO_y$$

(in Formula 1, M is at least one of Al, Zr, Ti, B, Mg, Mn, Ba, Si, Y, W and Sr, and x, y, a, b and c are in a range of $0.9 \leq x \leq 1.2$, $1.9 \leq y \leq 2.1$, $0.8 \leq a \leq 1$, $0 \leq c/(a+b) \leq 0.13$ and $0 \leq c \leq 0.11$, respectively).

9. A lithium secondary battery comprising:

a cathode which comprises the cathode active material according to claim 1; and
an anode disposed to face the cathode.

[FIG. 1]

# EP 4 046 967 A1

## EUROPEAN SEARCH REPORT

Application Number

EP 22 15 6712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DING YIN ET AL: "A Short Review on Layered LiNi 0.8 Co 0.1 Mn 0.1 O 2 Positive Electrode Material for Lithium-ion Batteries", ENERGY PROCEDIA, vol. 105, 1 May 2017 (2017-05-01), pages 2941-2952, XP055901332, NL ISSN: 1876-6102, DOI: 10.1016/j.egypro.2017.03.672 * page 2942, paragraph 2 Material preparation * | 1-9 | INV. C01G53/00 |
| X | LI XIANG-QUN ET AL: "Effect of sintering temperature on cycling performance and rate performance of LiNi0.8Co0.1Mn0.1O2", TRANSACTIONS OF NONFERROUS METALS SOCIETY OF CHINA, vol. 24, no. 12, 1 December 2014 (2014-12-01), pages 4023-4029, XP055901871, AMSTERDAM, NL ISSN: 1003-6326, DOI: 10.1016/S1003-6326(14)63564-0 * page 4024, paragraph 2 Experimental * | 1-9 | |
| X | LI TAO ET AL: "A short process for the efficient utilization of transition-metal chlorides in lithium-ion batteries: A case of Ni0.8Co0.1Mn0.1O1.1and LiNi0.8Co0.1Mn0.1O2", JOURNAL OF POWER SOURCES, ELSEVIER, AMSTERDAM, NL, vol. 342, 30 December 2016 (2016-12-30), pages 495-503, XP029895624, ISSN: 0378-7753, DOI: 10.1016/J.JPOWSOUR.2016.12.095 * page 496, paragraph 2.1.2 * | 1-9 | TECHNICAL FIELDS SEARCHED (IPC) C01G |

-/--

The present search report has been drawn up for all claims

| Place of search | Date of completion of the search | Examiner |
|---|---|---|
| Munich | 5 July 2022 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BI YUJING ET AL: "Correlation of oxygen non-stoichiometry to the instabilities and electrochemical performance of LiNi0.8Co0.1Mn0.1O2 utilized in lithium ion battery", JOURNAL OF POWER SOURCES, ELSEVIER, AMSTERDAM, NL, vol. 283, 20 February 2015 (2015-02-20), pages 211-218, XP029125070, ISSN: 0378-7753, DOI: 10.1016/J.JPOWSOUR.2015.02.095 * page 212, column 2, paragraph 2.1 * ----- | 1-9 | |
| X | US 9 819 012 B2 (DURACELL US OPERATIONS INC [US]) 14 November 2017 (2017-11-14) * examples 4i-1, C-2; tables 1,2 * ----- | 1-9 | |

**TECHNICAL FIELDS SEARCHED     (IPC)**

The present search report has been drawn up for all claims

| Place of search | Date of completion of the search | Examiner |
|---|---|---|
| Munich | 5 July 2022 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 15 6712**

This annex lists the patent family members relating to the patent documents cited in the above-mentioned European search report.
The members are as contained in the European Patent Office EDP file on
The European Patent Office is in no way liable for these particulars which are merely given for the purpose of information.

**05-07-2022**

| Patent document cited in search report | | Publication date | Patent family member(s) | | Publication date |
|---|---|---|---|---|---|
| US 9819012 | B2 | 14-11-2017 | CN | 104220381 A | 17-12-2014 |
| | | | EP | 2828202 A1 | 28-01-2015 |
| | | | JP | 6069482 B2 | 01-02-2017 |
| | | | JP | 2015516649 A | 11-06-2015 |
| | | | US | 2013247363 A1 | 26-09-2013 |
| | | | US | 2015194666 A1 | 09-07-2015 |
| | | | US | 2017110718 A1 | 20-04-2017 |
| | | | WO | 2013142637 A1 | 26-09-2013 |

EPO FORM P0459

For more details about this annex : see Official Journal of the European Patent Office, No. 12/82

**REFERENCES CITED IN THE DESCRIPTION**

**Patent documents cited in the description**

- KR 100821523